# EUROPEAN PATENT SPECIFICATION

(11) **EP 2 105 048 B1**
(45) Date of publication and mention of the grant of the patent: **24.08.2011**
(21) Application number: 08075257.9
(22) Date of filing: 25.03.2008
(51) Int. Cl.: A01K 41/02, A01K 45/00

(54) **A method for growing poultry**
Verfahren zur Geflügelzucht
Procédé d'élevage de la volaille

(43) Date of publication of application: 30.09.2009
(73) Proprietor: Humboldt Universität zu Berlin, 10099 Berlin (DE)
(72) Inventor: Halle, Ingrid, Dr., 06786 Wörlitz (DE); Tzschentke, Barbara, Dr., 16321 Rüdnitz/Albertshof (DE)
(74) Representative: Bittner, Thomas L.

(56) References cited:
- US-A- 5 657 720
- STOYANOV P ET AL: "THE EFFECT OF THE VARIOUS TEMPERATURES IN THE INCUBATOR AND OF THE HEAT OPTIMUM ON THE DEVELOPMENT GROWTH AND PRODUCTIVITY OF CHICKS PART 2 THE ACTION OF VARIOUS TEMPERATURES IN THE INCUBATOR DURING THE 2ND HALF OF INCUBATION ON EMBRYONAL AND POST EMBRYONAL MORTALITY" VETERINARNOMEDITSINSKI NAUKI, SOFIA, BG, vol. 6, no. 9, 1 January 1969 (1969-01-01), pages 87-94, XP008095079 ISSN: 0324-1068
- DECUYPERE E ET AL: "LONG-TERM EFFECT OF INCUBATION TEMPERATURES ON PRODUCTION PARAMETERS AND CHANGES IN LUTEINIZING HORMONE AND GONADAL STEROIDS DURING THE ONSET OF LAY IN THE HEN" POULTRY SCIENCE, CHAMPAIGN, IL, US, vol. 64, no. 9, 1 January 1985 (1985-01-01), pages 1785-1792, XP008094925 ISSN: 0032-5791
- ROMANOFF A L: "Influence of incubation temperature on the Hatchability of eggs, post-natal growth and survival of turkeys" JOURNAL OF AGRICULTURAL SCIENCE, CAMBRIDGE UNIVERSITY PRESS, LONDON, GB, vol. 25, 1 January 1935 (1935-01-01), pages 318-325, XP008094999 ISSN: 0021-8596

## Description

The invention relates to a method for growing domesticated birds kept for meat (poultry), to the use of such a method for producing poultry with increased performance, and to the use of an apparatus for breeding a poultry egg.

### Introduction

The problem underlying the present invention was to provide a means for providing poultry with higher vitality, a better growth and better nutrient uptake efficiency, which can easily be implemented on poultry farms.

The inventors have surprisingly found that this problem is solved by a method for growing domesticated birds kept for meat (poultry), in particular for raising chickens, ducks, geese, turkeys and/or quails as described below. In particular, the problem underlying the present invention is solved as defined in the claims.

Each of the above given poultry species (chickens, ducks, geese, turkeys, quails) has a particular breeding period, during which the chick develops in the egg. This breeding period has a different, well-defined length for each species. For example, the breeding period for chickens is 21 days, for turkeys, it is 28 days, for ducks, it is 28 to 35 days (dependent on the subspecies), for geese, it is usually at least 30 days (also dependent on the subspecies) and for quails, it is 18 days. The breeding period for each species and subspecies of poultry is known to a person of skill in the art or can easily be determined.

Stoyanov P et al. 1969 (Veterinamomeditsinski Nauki 6: 87-94, Sofia, Bulgaria) relates to the effect of the various temperatures in an incubator and of the heat optimum on the development growth and productivity of chicks.

Romanoff AL 1935 (Journal of Agricultural Science 25: 318-325) relates to the influence of the incubation temperature on the hatchability of eggs, post-natal growth and survival of turkeys.

According to the invention, the method comprises or consists of the following steps. First, a fertilized poultry egg from a certain species is provided. This fertilized poultry egg is then incubated at a temperature of 37.0 °C to 37.8 °C, herein referred to as the basal temperature. In the third step, the breeding temperature is raised from the basal temperature to a temperature of 38.0 °C to 39.8 °C, referred to as the adaptation temperature, for a total of 30 minutes to six hours each day during the last third of the breeding period before hatching.

In a preferred embodiment of the invention, the basal temperature of the method lies in the range of 37.0 °C to 37.8 °C, more preferred in the range of 37.1 °C to 37.6 °C, and most preferred in the range of 37.2 °C to 37.4 °C.

The above given wide range of the adaptation temperature of 38.0 °C to 39.8 °C needs to be chosen depending on the time for which the adaptation temperature is adjusted to per day. Generally, the lower the adaptation temperature within the range given above, the longer the incubation period can be chosen. In reverse, if a high adaptation temperature is chosen, the incubation period needs to be shortened accordingly. Preferably, if the adaptation temperature is 38.2 °C to 38.4 °C, the incubation period should be between two to six hours. If the adaptation temperature is 38.5 °C and 39.8 °C, the incubation period should be 30 minutes to less than two hours. In any event, the adaptation temperature and the incubation period should be chosen such that the poultry embryos in the eggs are not negatively affected or even killed. Such experiments can be conducted by a person of skill in the art based on his general knowledge on the influence of incubation temperature on physiology and development of poultry embryos as well as on the hatching success together with the information giving herein.

The adaptation temperature can be raised to the incubation period mentioned above in one consecutive time span or for at least two intermittent intervals each day. When the adaptation temperature is applied in intermittent time periods, these time periods can all be of the same length or of different lengths. It is preferred to raise the breeding temperature to the adaptation temperature only once per day.

Depending on the poultry species to be raised, it can be possible that raising the temperature to the adaptation temperature is only necessary for the last forth of the breeding period before hatching. In other instances, raising the temperature only in the last fifth, sixth of seventh part of the breeding period before hatching of the chicks can be sufficient. Disregarding the length of the breeding period, temperature raises to the adaptation temperature should be performed at least for three days, preferably for three to five days, most preferably six to seven days before hatching of the chicks.

When temperature ranges are given above, the temperature can fluctuate within this range to mimick naturally occurring temperature fluctuations, or can also be constant at a temperature within the given range.

The problem underlying the present invention is also solved by the use of a method as described above for producing poultry with increased performance. Increased performance is meant to refer to poultry with increased vitality, increased growth and improved nutrient uptake efficiency.

The problem underlying the present invention is also solved by the use of an apparatus not being part of the present invention for breeding a poultry egg (a hatch incubator) that can be used for performing the method described above. Such an apparatus comprises or consists of a chamber for receiving a poultry egg or eggs with a heating means for heating the chamber and the poultry eggs therein according to a temperature profile (i.e. according to a function of the temperature over the time). The heating means is controlled by a controlling means for generating such a temperature profile. The controlling means is configured such as to allow for the heating means to generate a temperature profile of a basal temperature of 37.0 °C to 37.8 °C in the chamber, and an adaptation temperature of 38.0 °C to 39.8 °C in the chamber for a total of thirty minutes and six hours per day. Details and further embodiments of this temperature profile are described above together with the method of the invention.

The heating means can be for example an electrical heater for heating the poultry egg. The controlling means can be an electronic actuator. The configuration of the electronic actuator can be realized through a computer program running on a computer that is connected to the electronic actuator. Thereby, the computer configures the controlling means (the electronic actuator).

In a further aspect of the invention, a hatch incubator as described above is used for performing a method for growing poultry with a given breeding period as described above.

As shown in the examples below, the present invention allows for growing a higher fraction of male poultry chicks and thereby allows for generating poultry with higher vitality, increased growth as measured by bodyweight at day 22 to 35 of the animals, and an increased nutrient uptake efficiency of 2 % compared to control animals.

### Examples

### Materials and Methods

A total of 1897 eggs (Brood 2005, Tab. 2), 1099 eggs (Brood 2006, Tab. 3), 1483 eggs (Brood 2007, Tab. 4) and 1600 eggs (Brood 2007, Tab. 5) of the ROSS strain (Lohmann AG) were incubated from day 1 to 18 and then sorted in three (Brood 2005, 2006) or two (Brood 2007, 2007) hatch incubators. In the first hatch incubator the temperature was 37.2 °C - 37.4 °C. The temperature was increased by 1 °C over standard (37.2 °C - 37.4 °C) in the 2^{nd} hatch incubator and 1 °C over standard for 2 hours daily in the 3^{rd} hatch incubator from day 18 of incubation until hatch. 1-day chickens were sorted by sex. Random sampling of chicks (30 males and 30 females of all incubators) were analyzed regarding vitality and quality of navel, legs, beak and belly using the Pasgar^{©}score (Pas Reform Hatchery Technology, NL, www.pasreform.com), a known tool for evaluating chick quality.

The growth experiment 2 (Brood 2006) lasted from day one to day 35 of age. In the trial a total of 120 one-day-old male chickens and 120 female chickens from every incubator were randomly distributed in treatments with 12 chicks per pen and 10 pens per group.

In Trial 2 broilers were kept according to the temperature-regime of the breeder (day 1 and 2 - 35-34 °C, 3 and 4 - 33-32 °C, 5 to 7 - 30 °C, 2^{nd} week - 29 °C, 3^{rd} week - 26 °C, 4^{th} week - 22 °C, 5^{th} week - 20 °C). Feed (Table 1) and water were provided for *ad libitum* consumption. Body weight and feed intake were recorded at day 14, 21 and 35 of age. Live weight and feed intake were recorded at day 14, 21 and 35 of age. Live weight was recorded for each broiler individually whereas feed was weighed back on a pen-basis weekly.

The data was analyzed by the SAS GLM procedure (Version 9.1, 2002/03). Means were compared using the Student-Newman-Keuls Test (P≤0.05).

**Table 1: Composition of the diet (g/kg)**

| Ingredients, g/kg | Trial 1 | Trial 2 |
|---|---|---|
| Wheat | 200.0 | 200.0 |
| Corn | 353.0 | 336.1 |
| Soya bean meal | 372.5 | 376.7 |
| Soya oil | 29.0 | 42.9 |
| Di-calcium-phosphate | 18.5 | 22.0 |
| Calcium carbonate | 10.4 | 4.6 |
| Sodium chloride | 2.5 | 3.2 |
| DL-methionine | 2.5 | 2.8 |
| L-lysine-HCl | 1.6 | 1.7 |
| Premix ¹⁾ | 10.0 | 10.0 |
| Composition, (g/kg) | | |
| Dry matter ²⁾ | 905 | 902 |
| Crude protein ²⁾ | 206 | 207 |
| ME, MJ/kg ³⁾ | 12,8 | 12.8 |
| Lysine ³⁾ | 12,5 | 12.5 |
| Methionine + Cystine ³⁾ | 9,6 | 9.6 |

| | | |
|---|---|---|
| ¹⁾ Vitamin- mineral premix provided per kg of diet: Fe, 50 mg; Cu, 15 mg; Zn, 80 mg; Mn, 120 mg; Se, 0.4 mg; I, 1.2 mg; Co, 0.55 mg; vitamin A, 12000 IU; vitamin D₃, 3000 IU; vitamin E, 30 mg; vitamin K₃, 3 mg; thiamine, 2 mg; riboflavin, 4.8 mg; pyridoxine, 3.6 mg; cobalamin, 15 µg; nicotinic acid, 27 mg; pantothenic acid, 9 mg; folic acid, 0.9 mg; biotin, 50 µg; choline chloride, 800 mg ²⁾ Analyzed values ³⁾ Calculated values (WPSA; 1985) | | |

### RESULTS

The results of the above-described trials are shown below in tables 2 to 8.

Incubation at 1 °C over the basal temperature for two hours during the last four days of the breeding period induced a higher percentage in male hatchlings in comparison with the control (table 2-6). Further, under these conditions, incubated male broilers show improved performance during the growing period (table 7) as well as a higher body weight at slaughter age, compared to the control group and broilers which were constantly incubated at the basal temperature during the last for days of incubation (table 8).

Tables 2-5: Results of the four incubation trials with raised temperature in an incubator. The eggs were kept at a temperature of 37.2 - 37.4 °C (basal temperature). During the last four days before hatching, the eggs were either kept at 37.2 - 37.4 °C (control), or at a temperature of 38.2 - 38.4 °C (adaptation temperature) for 2 h per day, while during the remaining 22 hours, the temperature was between 37.2 - 37.4 °C.

**Table 2: Result of incubation (n=1897 provided eggs, 90 unfertilized eggs = 4.7 %), Brood 2005**

| | Control | 4 days, 2 h, +1 °C |
|---|---|---|
| n, eggs per hatch incubator | 583 | 583 |
| Hatched living chickens, % | 96.2 | 97.8 |
| Male, % | 49.7 | 51.5 |
| Female, % | 50.3 | 48.5 |
| PasgarScore | | |
| Male | 9.4 | 9.7 |
| Female | 9.3 | 9.8 |

**Table 3: Result of incubation (n=1099 provided eggs, 40 unfertilized eggs = 3.6 %), Brood 2006**

| | Control | 4 days, 2 h, +1 °C |
|---|---|---|
| n, Eggs per hatch incubator | 337 | 337 |
| Hatched living chickens, % | 94.6 | 97.0 |
| Male, % | 51.2 | 53.2 |
| Female, % | 48.8 | 46.8 |
| PasgarScore | | |
| Male | 9.5 | 9.8 |
| Female | 9.6 | 9.9 |

**Table 4: Result of incubation (n=1483 provided eggs, 88 unfertilized eggs = 5.9 %), Brood 2007**

| | Control | 4 days, 2 h, +1 °C |
|---|---|---|
| n, Eggs per hatch incubator | 683 | 677 |
| Hatched living chickens, % | 92.5 | 92.5 |
| Male, % | 47.7 | 49.6 |
| Female, % | 44.8 | 42.8 |
| PasgarScore | | |
| Male | 9.4 | 9.5 |
| Female | 9.3 | 9.5 |

**Table 5: Result of incubation (n=1600 provided eggs, 125 unfertilized eggs = 7.8 %), Brood 2007**

| | Control | 4 days, 2 h, +1 °C |
|---|---|---|
| n, Eggs per hatch incubator | 665 | 664 |
| Hatched living chickens, % | 91.6 | 91.6 |
| Male, % | 47.7 | 49.2 |
| Female, % | 43.9 | 42.6 |
| PasgarScore | | |
| Male | 8.8 | 9.2 |
| Female | 9.9 | 9.1 |

**Table 6: Results of the statistical analysis of the incubations shown in Figures 2 -5 (Mean + standard deviation, SAS, 9.1, Student-Newman-Keuls-Test, P<0.05)**

| | Control | 4 days, 2 h, +1 °C |
|---|---|---|
| n | 4 | 4 |
| Male animals | 49.08 +1.70 ab | 50.88 +1.85 a |
| Female animals | 46.95 +3.09 ab | 45.18 +2.94 b |

| | | |
|---|---|---|
| a; b - significant differences between the groups for one feature are designated by different letters | | |

**Table 7: Performance of broilers - Trial 2 (temperature-regime of the breeder) (P≤0.05)**

| Age, days | Control, | 4 days, 24 h, +1°C | 4 days, 2 h, +1°C | Control, | 4 days, 24 h, +1°C | 4 days, 2 h, +1°C |
|---|---|---|---|---|---|---|
| | male | male | male | female | female | female |
| Feed intake, g/broiler/day | | | | | | |
| | | | | | | |
| 1. - 35. | 93.3a±3.2 | 94.3a±2.4 | 95.2a±3.0 | 80.8b±2.6 | 81.1b±3.1 | 80.7b±2.2 |

| Body weight gain, g/broiler/day | | | | | | |
|---|---|---|---|---|---|---|
| | | | | | | |
| 1.-35. | 62.2b±2.9 | 63.0ab±2.0 | 64.8a±2.0 | 53.4c±1.8 | 53.0c±2.4 | 54.2c±1.2 |

| Feed conversion, kg/kg | | | | | | |
|---|---|---|---|---|---|---|
| | | | | | | |
| 1. - 35. | 1.501b±0.04 | 1.498b±0.02 | 1.469c±0.02 | 1.514ab±0.02 | 1.531a±0.02 | 1.491bc±0.02 |

| | | | | | | |
|---|---|---|---|---|---|---|
| a; b; c - Means with different letters differ significantly | | | | | | |

**Table 8: Body weight of broilers - Trial 2 (P≤0.05)**

| Age, days | Control, | 4 days, 24 h, +1°C | 4 days, 2 h, +1°C | Control, | 4 days, 24 h, +1°C | 4 days, 2 h, +1°C |
|---|---|---|---|---|---|---|
| | male | male | male | female | female | female |
| Number of animals at age of 35 days | 116 | 116 | 118 | 118 | 116 | 119 |
| | | | | | | |
| | | | | | | |
| 35 | 2270b±203 | 2292ab±243 | 2336a±191 | 1927c±142 | 1934c±146 | 1938c±171 |

| | | | | | | |
|---|---|---|---|---|---|---|
| a; b; c - Means with different letters differ significantly | | | | | | |

## Claims

1. A method for growing poultry with a given breeding period,
**characterized by** the following steps:
(a) providing a fertilized poultry egg,
(b) incubating the egg at a basal temperature of 37 °C - 37.8 °C, and
(c) for the last third of the breeding period, raising the temperature from the basal temperature to an adaptation temperature of 38.0 °C - 39.8 °C for a total of 30 minutes to 6 hours per day.

2. The method according to claim 1, **characterized in that** the basal temperature is 37.0 °C - 37.8 °C.

3. The method according to claim 1 or 2, **characterized in that** the basal temperature is 37.2 °C - 37.4 °C.

4. The method according to claim 1 to 3, **characterized in that** the adaptation temperature is 38.2 °C - 38.4 °C for 2 to 6 hours.

5. The method according to claim 1 to 4, **characterized in that** the adaptation temperature is 38.5 °C - 39.8 °C for 30 minutes to less than 2 hours.

6. The method according to claim 1 to 5, **characterized in that** the temperature raise of step (c) to the adaptation temperature is performed for a consecutive period of time.

7. The method according to claim 1 to 5, **characterized in that** the temperature raise of step (c) to the adaptation temperature is performed intermittently for at least two periods of time.

8. The method according to claim 1 to 7, **characterized in that** the raise of the temperature raise of step (c) to the adaptation temperature is performed for the last fourth of the breeding period.

9. Use of a method according to claim 1 to 8 for producing poultry with increased performance.

10. Use of an apparatus for performing a method according to claims 1 to 8 for breeding a poultry egg, the apparatus comprising
- a chamber for receiving a poultry egg with a heating means for heating the chamber according to a temperature profile, and
- a controlling means for controlling the heating means,
whereby the controlling means is configured to allow for the heating means to generate a temperature profile of a basal temperature of 37.0 °C - 37.8 °C, and an adaptation temperature of 38.0 °C - 39.8 °C, for a total of 30 minutes to 6 hours per day in the chamber.

11. The use according to claim 10, wherein the heating means is an electrical heater for heating the chamber and/or the controlling means is an electronic actuator.

12. The use according to claim 10 or 11, wherein the controlling means is configured by a computer program run by a computer.

## Patentansprüche

1. Verfahren zur Zucht von Geflügel mit einer bestimmten Brutzeit,
**gekennzeichnet durch** die folgenden Schritte:
(a) Bereitstellen eines befruchteten Geflügeleis,
(b) Inkubieren des Eis bei einer Basaltemperatur von 37 °C - 37,8 °C und
(c) für das letzte Drittel der Brutzeit, Erhöhen der Temperatur von der Basaltemperatur auf eine Anpassungstemperatur von 38,0 °C - 39,8 °C für insgesamt 30 Minuten bis 6 Stunden pro Tag.

2. Verfahren nach Anspruch 1, **dadurch gekennzeichnet, dass** die Basaltemperatur 37,0 °C - 37,8 °C ist.

3. Verfahren nach Anspruch 1 oder 2, **dadurch gekennzeichnet, dass** die Basaltemperatur 37,2 °C - 37,4 °C ist.

4. Methode nach Anspruch 1 bis 3, **dadurch gekennzeichnet, dass** die Anpassungstemperatur 38,2 °C - 38,4 °C für 2 bis 6 Stunden ist.

5. Verfahren nach Anspruch 1 bis 4, **dadurch gekennzeichnet, dass** die Anpassungstemperatur 38,5 °C - 39,8 °C für 30 Minuten bis weniger als 2 Stunden ist.

6. Verfahren nach Anspruch 1 bis 5, **dadurch gekennzeichnet, dass** die Temperaturerhöhung von Schritt (c) auf die Anpassungstemperatur für eine fortlaufende Zeitperiode durchgeführt wird.

7. Verfahren nach Anspruch 1 bis 5, **dadurch gekennzeichnet, dass** die Temperaturerhöhung von Schritt (c) auf die Anpassungstemperatur mit Unterbrechung(en) für mindestes zwei Zeitperioden durchgeführt wird.

8. Verfahren nach Anspruch 1 bis 7, **dadurch gekennzeichnet, dass** die Temperaturerhöhung von Schritt (c) auf die Anpassungstemperatur für das letzte Viertel der Brutzeit durchgeführt wird.

9. Verwendung eines Verfahrens nach Anspruch 1 bis 8 zur Herstellung von Geflügel mit verbesserter Leistung.

10. Verwendung einer Vorrichtung zur Durchführung eines Verfahrens nach Anspruch 1 bis 8 zur Zucht eines Geflügeleis, wobei die Vorrichtung umfasst
- eine Kammer zur Aufnahme eines Geflügeleis mit einem Heizmittel zum Beheizen der Kammer gemäß einem Temperaturprofil und
- ein Steuerungsmittel zur Steuerung des Heizmittels,
wobei das Steuerungsmittel so eingerichtet ist, dass das Heizmittel ein Temperaturprofil mit einer Basaltemperatur von 37,0 °C - 37,8 °C und einer Anpassungstemperatur von 38,0 °C - 39,8 °C, für insgesamt 30 Minuten bis 6 Stunden pro Tag in der Kammer erzeugen kann.

11. Verwendung nach Anspruch 10, wobei das Heizmittel eine elektrische Heizung zum Beheizen der Kammer ist und/oder das Steuerungsmittel ein elektronischer Regler ist.

12. Verwendung nach Anspruch 10 oder 11, wobei das Steuerungsmittel durch ein Computerprogramm konfiguriert wird, das auf einem Computer läuft.

## Revendications

1. Procédé d'élevage de la volaille avec une période de reproduction donnée,
**caractérisé par** les étapes suivantes consistant à :
(a) fournir un oeuf de volaille fertilisé,
(b) incuber l'oeuf à une température basale de 37 °C à 37,8 °C, et
(c) pendant le dernier tiers de la période de reproduction, élever la température de la température basale à une température d'adaptation de 38,0 °C à 39,8 °C pendant un total de 30 minutes à 6 heures par jour.

2. Procédé selon la revendication 1, **caractérisé en ce que** la température basale est de 37,0 °C à 37,8 °C.

3. Procédé selon la revendication 1 ou 2, **caractérisé en ce que** la température basale est de 37,2 °C à 37,4 °C.

4. Procédé selon les revendications 1 à 3, **caractérisé en ce que** la température d'adaptation est de 38,2 °C à 38,4 °C pendant 2 à 6 heures.

5. Procédé selon les revendications 1 à 4, **caractérisé en ce que** la température d'adaptation est de 38,5 °C à 39,8 °C pendant 30 minutes à moins de 2 heures.

6. Procédé selon les revendications 1 à 5, **caractérisé en ce que** l'élévation de température de l'étape (c) à la température d'adaptation est effectuée pendant une période de temps en continu.

7. Procédé selon les revendications 1 à 5, **caractérisé en ce**
**que** l'élévation de température de l'étape (c) à la température d'adaptation est effectuée de façon intermittente pendant au moins deux périodes de temps.

8. Procédé selon les revendications 1 à 7, **caractérisé en ce que** l'élévation de température de l'étape (c) à la température d'adaptation est effectuée pendant le dernier quart de la période de reproduction.

9. Utilisation d'un procédé selon les revendications 1 à 8, pour produire de la volaille ayant une performance accrue.

10. Utilisation d'un appareil destiné à effectuer un procédé selon les revendications 1 à 8, pour reproduire un oeuf de volaille, l'appareil comprenant
- une chambre permettant de recevoir un oeuf de volaille avec un moyen chauffant permettant de chauffer la température selon un profil de température, et
- un moyen de commande permettant de commander le moyen chauffant,
moyennant quoi le moyen de commande est configuré pour permettre au moyen chauffant de générer un profil de température d'une température basale de 37,0 °C à 37,8 °C, et une température d'adaptation de 38,0 °C à 39,8 °C, pendant un total de 30 minutes à 6 heures par jour dans la chambre.

11. Utilisation selon la revendication 10, dans laquelle le moyen chauffant est un chauffage électrique permettant de chauffer la chambre et/ou le moyen de commande est un actionneur électronique.

12. Utilisation selon la revendication 10 ou 11, dans laquelle le moyen de commande est configuré par un programme informatique exécuté par un ordinateur.
